# EUROPEAN PATENT SPECIFICATION

(11) **EP 4 068 487 B1**
(45) Date of publication and mention of the grant of the patent: **24.09.2025**
(21) Application number: 22164781.1
(22) Date of filing: 28.03.2022
(51) Int. Cl.: H01M 50/375, H01M 50/308, H01M 50/367, H01M 50/342, H01M 50/325, H01M 10/04, H01M 10/052

(54) **SEALING PLUG, BATTERY CELL, AND ELECTRIC APPARATUS**
BATTERIEZELLE UND ELEKTRISCHE VORRICHTUNG
CELLULE DE BATTERIE, ET APPAREIL ÉLECTRIQUE

(30) Priority: 30.03.2021 CN 202110340938
(43) Date of publication of application: 05.10.2022
(73) Proprietor: Ningde Amperex Technology Ltd., Ningde City, Fujian 352100 (CN)
(72) Inventor: SHEN, Yang, Ningde City, Fujian Province, 352100 (CN)
(74) Representative: Icosa

(56) References cited:
- WO-A1-2020/081372
- US-A- 2 766 408
- US-A- 4 397 919
- US-A1- 2002 081 484
- US-A1- 2010 136 391

## Description

### TECHNICAL FIELD

This invention relates to the field of battery technologies, and in particular, to a battery cell and an electric apparatus (see e.g. US 2002/081484 A1, forming the basis for the preamble of claim 1).

### BACKGROUND

A battery cell is an apparatus that converts external energy into electric energy and stores the electric energy inside to supply power to an external device (for example, a portable electronic device) when needed. At present, battery cells are widely used in electronic products such as mobile phones, tablet computers, or laptop computers.

A battery cell continuously generates heat under high temperature, misuse, or short circuit, which leads to continuous heat accumulation inside the battery cell, and in turn causes thermal runaway in the battery cell and produces high temperature and high pressure gas inside. This may cause safety accidents such as explosions if the gas is not discharged in time. Therefore, it is currently necessary to provide a battery cell that is able to discharge high-temperature gas when temperature of the battery cell is higher than a specified temperature, so as to improve the safety performance of the battery cell and reduce safety hazards in using the battery cell.

### SUMMARY

The present invention provides a battery cell according to claim 1 and an electric apparatus according to claim 7, so as to improve the current situation that battery cells are unable to discharge internal gas in time when temperature is higher than a specified temperature.

Preferred embodiments are defined in the dependent claims.

Compared with existing battery cells on the market, the battery cell provided in the present invention has the thermally deformable element inside that deforms when a temperature of the battery cell is higher than the preset threshold, so that the accommodating cavity of the housing can communicate with the external environment. In this way, gas inside the accommodating cavity can be discharged, reducing or eliminating hazards of explosion of the battery cell. In other words, the battery cell according to the present invention can relieve the current situation that battery cells are unable to discharge internal gas in time when the temperature of the battery cell is higher than a specified temperature.

### BRIEF DESCRIPTION OF DRAWINGS

One or more embodiments are described together with corresponding accompanying drawings. These embodiments impose no limitation on the invention. Elements with a same reference sign in the accompanying drawings represent similar elements. Unless otherwise stated, the accompanying drawings impose no limitation on scale.
FIG. 1 is a cross-sectional view of a battery cell in one direction according to an embodiment;
FIG. 2 is a cross-sectional view of a sealing plug in FIG. 1;
FIG. 3 is a schematic diagram of an electric apparatus according to an embodiment.

### Reference signs:

1. battery cell; 101. accommodating cavity; 102. through hole;
100. housing;
200. electrode assembly;
300. pole;
400. sealing plug; 410. first fixed portion; 420. thermally deformable portion; 411. base part; 412. extension part; 421. thermally deformable element; 422. second fixed portion; 4211. body; 4212. first annular boss; 4213. second annular boss; 4214. first annular flange; 4215. second annular flange; 42111. first connecting unit; 42112. second connecting unit; 401. first via hole; 402. second via hole; 403. groove;
2. electric apparatus.

### DETAILED DESCRIPTION

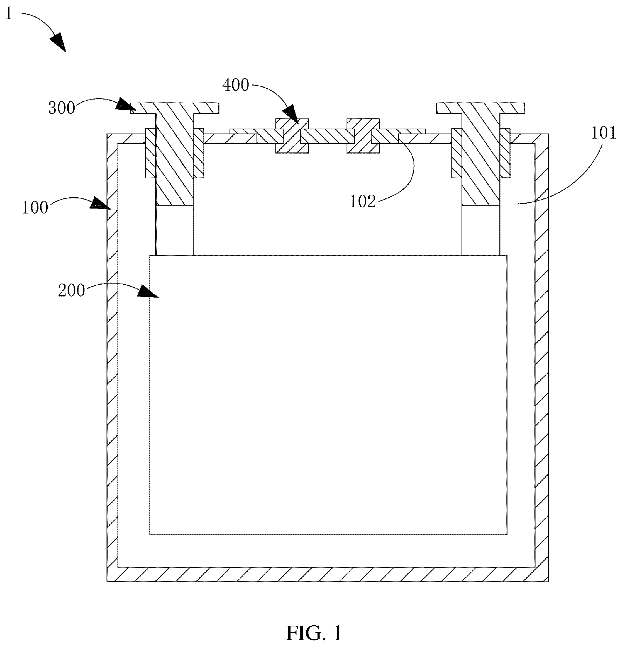

Refer to FIG. 1 to FIG. 2 that respectively show a cross-sectional view of a battery cell 1 in a direction and a cross-sectional view of a sealing plug according to an embodiment. The battery cell 1 includes a housing 100, an electrode assembly 200, a pole 300, and a sealing plug 400. The housing 100 is provided with an accommodating cavity 101 inside, and is provided with a through hole 102 that communicates with both the accommodating cavity 101 and an external environment of the battery cell 1. The electrode assembly 200 is accommodated in the accommodating cavity 101. The pole 300 penetrates through the housing 100, with one end electrically connected to the electrode assembly 200, and the other end extending out of the housing 100. The sealing plug 400 seals the through hole 102, and includes a thermally deformable portion 420, where the thermally deformable portion 420 covers at least part of the through hole 102, and the thermally deformable portion 420 is configured to at least partially deform when temperature is higher than a preset threshold, so that the accommodating cavity 101 communicates with the external environment. It is worth mentioning that the "preset threshold" in this application means a temperature value where, when temperature of the battery cell 1 rises to this value, the thermally deformable portion 420 deforms by the exact amount to allow the accommodating cavity 101 to communicate with the external environment. When temperature of the battery cell 1 is higher than the preset threshold, the accommodating cavity 101 is already in communication with the external environment. The preset threshold is a temperature value that is higher than a normal operating temperature of the battery cell 1, and lower than a thermal runaway temperature of the battery cell 1. In other words, when the battery cell 1 is in a normal operating state, its temperature is lower than the preset threshold, avoiding electrolyte leakage due to communication between the internal accommodating cavity 101 and the external environment during normal operation of the battery cell 1; when the battery cell 1 is in thermal runaway, its temperature is higher than the preset threshold, avoiding explosion of the battery cell caused by failure in discharging internal gas in time when thermal runaway occurs in the battery cell 1. It is worth adding here that "deform" mentioned in this application specifically includes hot melt, shrink and expand.

For the housing 100, refer to FIG. 1. The entire housing 100 is a flat cuboid, and is provided with the accommodating cavity 101 inside that is configured to accommodate the electrode assembly 200 and electrolyte. In this embodiment, the battery cell 1 is a steel shell battery cell, that is, the housing 100 is a steel shell. It can be understood that in other embodiments of this application, the battery cell 1 may alternatively be other types of hard shell battery cells, that is, the housing 100 is a shell of other metals such as aluminum. In addition, the housing 100 is further provided with the through hole 102, where the through hole 102 communicates with both the accommodating cavity 101 and the external environment of the battery cell 1. In this embodiment, the through hole 102 is an electrolyte injection hole of the battery cell 1, and electrolyte is injected into the accommodating cavity 101 through the through hole 102. It should be understood that in other embodiments of this application, the through hole 102 may alternatively be other hole-like structures separate from an electrolyte injection hole. That is, the battery cell 1 has an injection hole and a through hole 102 that are separate from each other.

For the electrode assembly 200, refer to FIG. 1. The electrode assembly 200 is accommodated in the accommodating cavity 101, and includes a first electrode plate (not shown in the figure), a second electrode plate (not shown in the figure), and a separator (not shown in the figure) that are stacked. The first electrode plate and the second electrode plate have opposite polarities and are spaced apart. One of them is a positive electrode plate, and the other is a negative electrode plate. The separator is arranged between the two electrode plates to separate them. The first electrode plate, second electrode plate, and separator are stacked and the resulting stack is wound into a cylindrical structure with an oblong cross section, for ease of being accommodated in the accommodating cavity 101. It can be understood that although the electrode assembly 200 in this embodiment is a wound electrode assembly, this application is not limited thereto. In other embodiments of this application, the electrode assembly 200 may alternatively be a laminated electrode assembly. The housing 100 is further filled with electrolyte. The electrolyte infiltrates into the electrode assembly 200. The electrolyte is used to provide an environment for conduction of lithium ions, so that lithium ions can be duly intercalated into the first electrode plate or the second electrode plate, thereby implementing charging or discharging of the battery cell 1.

For the pole 300, refer to FIG. 1. The pole 300 runs through the housing 100 and is fastened to the housing 100. One end of the pole 300 extends into the accommodating cavity 101 and is electrically connected to the electrode plate in the electrode assembly 200; the other end of the pole 300 extends out of the housing 100 and is electrically connected to an external load, thereby supplying power to the load. The battery cell 1 includes two poles 300, where one pole 300 is electrically connected to the first electrode plate, and the other pole 300 is electrically connected to the second electrode plate.

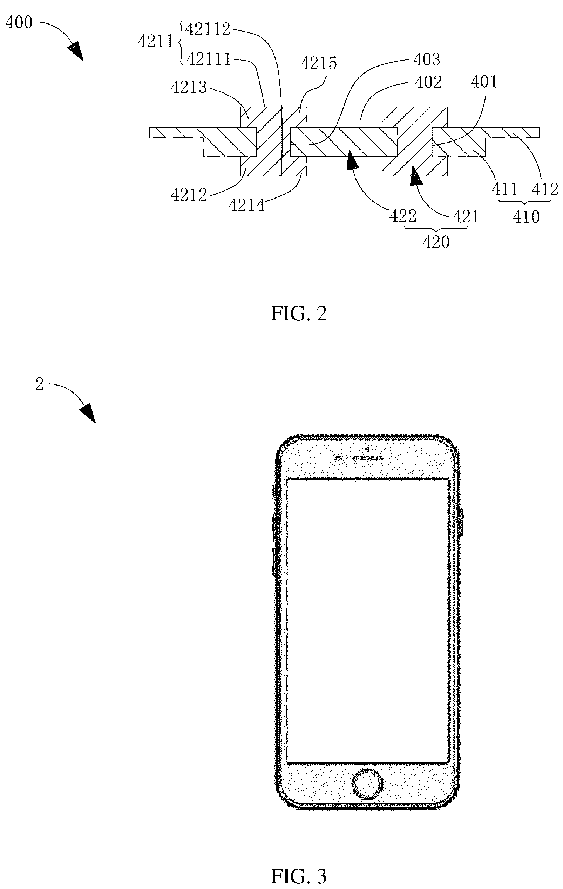

For the sealing plug 400, specifically refer to FIG. 2 and FIG. 1. The sealing plug 400 is provided in the through hole 102 and seals the through hole 102. In this embodiment, the sealing plug 400 includes the first fixed portion 410 and the thermally deformable portion 420. The first fixed portion 410 is fastened to the housing 100 and is provided with the first via hole 401 that communicates with the accommodating cavity 101. The first via hole 401 may directly communicate with the accommodating cavity 101 or indirectly communicate with the accommodating cavity 101 by connecting to an end of the through hole 102 at the side of the accommodating cavity 101. The thermally deformable portion 420 is disposed in the first via hole 401 and seals the first via hole 401, and the thermally deformable portion 420 is configured to at least partially deform when temperature is higher than the preset threshold, so that the accommodating cavity 101, the first via hole 401, and the external environment of the battery cell 1 communicate sequentially, allowing gas at two sides of the thermally deformable portion 420 to communicate with each other.

The entire first fixed portion 410 is a rotary structure, including the base part 411 and the extension part 412. Specifically, the base part 411 is a flat columnar structure, which at least partially extends into the through hole 102. The base part 411 is provided with the first via hole 401 in the middle, and two ends of the first via hole 401 respectively communicate with an interior of the housing 100 and the external environment. An end of the base part 411 away from the accommodating cavity 101 extends outward to form the extension part 412. The extension part 412 is arranged around the base part 411 and fastened to the outer surface of the housing 100. Optionally, the first fixed portion 410 contains metal. For example, the first fixed portion 410 is made of carbon steel, and then the first fixed portion 410 can be conveniently fastened to the housing 100 by welding. It can be understood that the material of the first fixed portion 410 is not specifically limited. For example, in other embodiments the first fixed portion 410 may alternatively be made of nonmetallic materials such as plastic that provides good heat resistance. Likewise, a connection manner of the first fixed portion 410 and the housing 100 is not specifically limited in this application. For example, in other embodiments, the first fixed portion 410 may alternatively be fastened to the housing 100 by bonding, screwing, or the like. Examples are not provided one by one herein.

The thermally deformable portion 420 includes a thermally deformable element 421. The thermally deformable element 421 is disposed in the first via hole 401 and is configured to deform when temperature is higher than the preset threshold, so that the accommodating cavity 101, the first via hole 401, and the external environment communicate sequentially. The thermally deformable element 421 includes a body 4211, and the body 4211 runs through the first via hole 401. A first end of the body 4211 that extends into the accommodating cavity 101 extends away from an axis of the first via hole 401 to form a first annular boss 4212; the first annular boss 4212 is arranged around the body 4211 and is attached to one surface of the first fixed portion that faces toward the accommodating cavity. A second end of the body 4211 that extends out of the first via hole 401 extends away from the axis of the first via hole 401 to form a second annular boss 4213; the second annular boss 4213 is arranged around the body 4211 and is attached to one surface of the first fixed portion 410 that faces away from the accommodating cavity 101. As such, two ends of the thermally deformable element 421 tightly clamp the first fixed portion 410 in an axial direction of the first via hole 401, so that the thermally deformable element 421 is fastened to the first fixed portion 410.

In some embodiments, for the battery cell 1, a normal operating temperature is lower than 100°C, and a thermal runaway temperature is 150°C. Considering that thermal shrinkage can achieve the purpose of pressure relief, the thermally deformable element 421 is preferably made of a material with a melting point between 110°C and 170°C. Optionally, when the thermally deformable element 421 is designed as a hot melt or heat-shrinkable element, the thermally deformable element 421 includes any one of polyethylene, polypropylene, polyvinyl chloride, and polypropylene ethylene, or a mixture thereof. When temperature is higher than the preset threshold, the thermally deformable element 421 shrinks or melts, and a joint between the thermally deformable element 421 and the first fixed portion 410 is at least partially torn and disconnected, so that a pressure relief channel is formed between the thermally deformable element 421 and the first fixed portion 410, which communicates the accommodating cavity 101 to the external environment. Alternatively, the thermally deformable element 421 melts to form a channel that communicates the accommodating cavity 101 to the external environment, so that the accommodating cavity 101 communicates with the external environment. Further optionally, a gap is present between part of an outer surface of the thermally deformable element 421 located between the first annular boss 4212 and the second annular boss 4213 and an inner surface of the first via hole 401. The gap reduces strength of connection between the thermally deformable element 421 and the first fixed portion 410, making it easier to form the channel. Moreover, it also increases the cross-sectional size of the channel, helping improve the efficiency of pressure relief. Optionally, when the thermally deformable element 421 is designed as a heat-expandable element, the thermally deformable element may include any one of polyamide (nylon 6) and glass, or a mixture thereof. When temperature is higher than the preset threshold, the thermally deformable element 421 expands, and a joint between the thermally deformable element 421 and first fixed portion 410 is at least partially torn and disconnected, so that a pressure relief channel is formed between the thermally deformable element 421 and first fixed portion 410, which communicates the accommodating cavity 101 to the external environment. Further optionally, a gap is present between part of an outer surface of the thermally deformable element 421 located between the first annular boss 4212 and the second annular boss 4213 and an inner surface of the first via hole 401. The gap reduces strength of connection between the thermally deformable element 421 and the first fixed portion 410, making it easier to form the channel. Moreover, it also provides space for expansion of the thermally deformable element 421.

The thermally deformable portion 420 further includes a second fixed portion 422. Specifically, still referring to FIG. 2, the thermally deformable element 421 is provided with a second via hole 402 in the middle, and two ends of the second via hole 402 respectively communicate with the accommodating cavity 101 and the external environment of the battery cell 1. One end of the second via hole 402 that faces toward the accommodating cavity 101 may directly communicate with the accommodating cavity 101, or may indirectly communicate with the accommodating cavity 101 by communicating with an end of the through hole 102 at the side of the accommodating cavity 101. The second fixed portion 422 is provided in the second via hole 402 and seals the second via hole 402. Specifically, an inner surface of the second via hole 402 recesses to form a groove 403 surrounding the second via hole 402, a first annular flange 4214 protruding out of an annular wall surface of the groove 403 is formed at a side of the body in the groove 403 that is close to the accommodating cavity 101, and a second annular flange 4215 protruding out of the annular wall surface of the groove 403 is formed at a side of the body in the groove 403 that is away from the accommodating cavity 101. The second fixed portion 422 is received in the groove 403, that is, received between the first annular flange 4214 and the second annular flange 4215, so as to seal the second via hole 402. The thermally deformable element 421 cannot go though from being heated to being hot melted at one instance, it has to undergo thermal expansion or thermal shrinkage first. Provision of the second fixed portion 422 allows high temperature and high pressure gas inside the battery cell 1 to discharge through the gap between the thermally deformable element 421 and the first fixed portion 410, and discharge through the gap between the thermally deformable element 421 and the second fixed portion 422 after the thermally deformable element 421 shrinks by such amount that joints between it and the components connected (the first fixed portion and the second fixed portion) are at least partially disconnected. In addition, the provision of the second fixed portion 422 can also reduce a total volume of the thermally deformable element 421, so that the thermally deformable element 421 can easily change its form to, for example, shrink or melt when heated. In conclusion, the provision of the second fixed portion 422 improves the efficiency of pressure relief for the battery cell 1 and enhances the thermal sensitivity of the thermally deformable element 421. In this embodiment, the second fixed portion 422 contains metal. For example, the first fixed portion 410 is made of carbon steel. It can be understood that the material of the second fixed portion 422 is not specifically limited. For example, in other embodiments, the second fixed portion 422 may alternatively be made of nonmetallic materials such as plastic that provides good heat resistance.

In some embodiments, the body 4211 of the thermally deformable element 421 includes a first connecting unit 42111 and a second connecting unit 42112 that are mutually connected in an axial direction of the first via hole 401. The first annular boss 4212 extends outward from an outer surface of the first connecting unit 42111, the second annular boss 4213 extends outward from an outer surface of the second connecting unit 42112, the first annular flange 4214 extends inward from an inner surface of the first connecting unit 42111, and the second annular flange 4215 extends inward from an inner surface of the second connecting unit 42112. Ends of the first connecting unit 42111 and second connecting unit 42112 that are close to each other are fastened to each other through hot melting. The first annular boss 4212 and the second annular boss 4213 are both fastened to the first fixed portion 410 through hot melting. The first annular flange 4214 and the second annular flange 4215 are both fastened to the second fixed portion 422 through hot melting. In this connection manner, the first connecting unit 42111 and the second connecting unit 42112 are separately molded, and all components are fastened to each other through hot melting. Such assembly process requires no additional material such as sealant to implement sealing at joints of the components in the sealing plug 400. Certainly, the joints of the components in the sealing plug 400 may be additionally coated with sealant for secondary sealing in actual manufacturing, so as to achieve a better sealing effect. Moreover, the first connecting unit 42111 and the second connecting unit 42112 may be designed to have a same size, thereby achieving better interchangeability. It should be understood that although the thermally deformable element 421, second fixed portion 422, and first fixed portion 410 are fastened to each other through hot melting, this is not limited thereto. In other embodiments , the thermally deformable element 421, second fixed portion 422, and first fixed portion 410 may be fastened in other manners. For example, in some embodiments, the first fixed portion 410, the thermally deformable element 421, and the second fixed portion 422 are integrally formed by injection molding. Specifically, the first fixed portion 410 and the second fixed portion 420 are received in an injection mold, and polyethylene (or other optional materials such as polypropylene, polyvinyl chloride, and polypropylene) is injected to the injection mold to form an integrated sealing plug.

It should be noted that, based on the foregoing embodiments, a cross-sectional profile of any one of the first annular boss 4212, second annular boss 4213, first annular flange 4214, and second annular flange 4215 may be circular, but is not limited thereto. The profile may alternatively be square or other polygonal shapes, which is not specifically limited herein. That is, the above structures are not limited to hollow cylindrical structures.

The battery cell provided in the embodiments includes the housing 100, electrode assembly 200, pole 300, and sealing plug 400. The housing 100 is provided with the accommodating cavity 101 inside, and the through hole 102 that communicates with both the accommodating cavity 101 and the external environment of the battery cell 1. The sealing plug 400 seals the through hole 102, and includes a thermally deformable portion 420, where the thermally deformable portion 420 covers at least part of the through hole 102, and the thermally deformable portion 420 is configured to at least partially deform when temperature is higher than a preset threshold, so that the accommodating cavity 101 communicates with the external environment.

Compared with existing battery cells on the market, the battery cell 1 provided in the embodiments has the thermally deformable portion 420 inside that deforms when temperature is higher than the preset threshold and about to cause swelling, so that a channel is formed between the sealing plug 400 and the housing 100, communicating the accommodating cavity 101 to the external environment, thereby discharging the high pressure gas inside the accommodating cavity 101 to the external environment. In other words, the battery cell 1 provided in the embodiments can relieve the current situation that battery cells are unable to discharge internal gas in time when temperature is higher than a specified temperature.

Optionally, the through hole is an electrolyte injection hole of the battery cell, that is, the sealing plug in this embodiment is an injection plug configured to seal the electrolyte injection hole. Therefore it is not necessary to provide the battery cell with both an electrolyte injection hole and the through hole that are separate from each other. This can not only shorten the preparation cycle of a battery cell, but also reduce the probability of electrolyte leakage of the battery cell with a reduced quantity of holes.

An embodiment further provides an electric apparatus. FIG. 3 is a schematic diagram of an electric apparatus 2 according to an embodiment. The electric apparatus 2 includes the battery cell 1 in any one of the foregoing embodiments. The electric apparatus 2 in this embodiment is a mobile phone. It can be understood that in other embodiments of this application, the electric apparatus 2 may alternatively be other electric apparatuses powered by electricity such as a tablet computer, a laptop computer, and a drone.

Because the battery cell 1 is included, the battery cell in the electric apparatus 2 provided in this embodiment can also improve the current situation that battery cells are unable to discharge internal gas in time when temperature is higher than a specified temperature, which in turn improves the safety performance of the electric apparatus.

Finally, it should be noted that the foregoing embodiments are merely intended to describe the technical solutions of this application, and are not intended to limit this application. Persons of ordinary skill in the art should understand that modifications can be made to the technical solutions described in the foregoing embodiments, as long as they remain within the scope of the appended claims.

## Claims

1. A battery cell (1), comprising a housing (100) and a sealing plug (400), wherein the housing (100) is provided with an accommodating cavity (101) inside and with a through hole (102), the through hole (102) is configured to communicate with both the accommodating cavity (101) and an external environment of the battery cell (1), wherein the sealing plug (400) is configured to seal the through hole (102) and comprises: a thermally deformable portion (420) and a first fixed portion (410), the thermally deformable portion (420) covers at least a part of the through hole (102) and the first fixed portion (410) is fastened to an outer surface of the housing (100), and is provided with a first via hole (401) communicating with the accommodating cavity (101);
the thermally deformable portion (420) is disposed in the first via hole (401) and seals the first via hole (401)
the thermally deformable portion (420) comprises a thermally deformable element (421), wherein the thermally deformable element (421) comprises: a body (4211), wherein the body (4211) runs through the first via hole (401); a first annular boss (4212), wherein the first annular boss (4212) is formed by extending an end of the body (4211) that extends into the accommodating cavity (101) away from an axis of the first via hole (401), and the first annular boss (4212) is arranged around the body (4211) and is attached to a surface of the first fixed portion (410) that faces toward the accommodating cavity (101); and a second annular boss (4213), wherein the second annular boss (4213) is formed by extending an end of the body (4211) that extends out of the housing (100) away from the axis of the first via hole (401), and the second annular boss (4213) is arranged around the body (4211) and is attached to a surface of the first fixed portion (410) that faces away from the accommodating cavity (101);
the thermally deformable element (421) is configured to deform when a temperature of the battery cell (1) is higher than a preset threshold, so that the accommodating cavity (101), the first via hole (401), and the external environment communicate sequentially;
the thermally deformable portion (420) further comprises a second fixed portion (422); and
**characterised in that** the thermally deformable element (421) is provided with a second via hole (402) communicating the accommodating cavity (101) to the external environment, and the second fixed portion (422) is provided in the second via hole (402) and seals the second via hole (402).

2. The battery cell (1) according to claim **1,** wherein the first fixed portion (410) comprises a base part (411) and an extension part (412);
the base part (411) at least partially extends into the through hole (102), and the base part (411) is provided with the first via hole (401); and
the extension part (412) is formed by extending a side wall of the base part (411) outward, and the extension part (412) is fastened to the outer surface of the housing (100).

3. The battery cell (1) according to claim **1** or claim **2,** wherein an inner surface surrounding the second via hole (402) have a recess formed in form of a groove (403), and the second fixed portion (422) is received in the groove (403).

4. The battery cell (1) according to any one of claims **1** to **3,** wherein the body (4211) comprises a first connecting unit (42111) and a second connecting unit (42112) that are mutually connected in an axial direction of the first via hole (401);
a first annular flange (4214) protruding out of an annular wall surface of the groove (403) is formed at a side of the body (4211) closer to the accommodating cavity (101), and a second annular flange (4215) protruding out of the annular wall surface of the grooves (403) formed at a side of the body (4211) away from the accommodating cavity (101);
the first annular boss (4212) extends from an outer surface of the first connecting unit (42111), the second annular boss (4213) extends from an outer surface of the second connecting unit (42112), the first annular flange (4214) extends from an inner surface of the first connecting unit (42111), and the second annular flange (4215) extends from an inner surface of the second connecting unit (42112); and
the first connecting unit (42111) and the second connecting unit (42112) are fastened to each other through hot melting, the first annular boss (4212) and the first fixed portion (410) are fastened to each other through hot melting, the second annular boss (4213) and the first fixed portion (410) are fastened to each other through hot melting; the first annular flange (4214) and the second fixed portion (422) are fastened to each other through hot melting; and the second annular flange (4215) and the second fixed portion (422) are fastened to each other through hot melting.

5. The battery cell (1) according to any one of claims **1** to **4,** wherein the first fixed portion (410) comprises a metal; and/or
the second fixed portion (422) comprises the metal; and/or
the thermally deformable element (421) comprises at least one selected from the group consisting of polyethylene, polypropylene, polyvinyl chloride, and polypropylene ethylene.

6. The battery cell (1) according to any one of claims **1** to **5,** wherein the thermally deformable portion (420) is configured to at least partially melt, or expand, or shrink when the temperature of the battery cell (1) is higher than the preset threshold, so that the thermally deformable portion (420) and a connected part are at least partially disconnected at a joint.

7. An electric apparatus (2), **characterized by** comprising the battery cell (1) according to any one of claims **1** to **6.**

## Patentansprüche

1. Batteriezelle (1), umfassend ein Gehäuse (100) und einen Verschlussstopfen (400), wobei das Gehäuse (100) innen mit einem Aufnahmehohlraum (101) und mit einem Durchgangsloch (102) versehen ist, wobei das Durchgangsloch (102) so eingerichtet ist, dass es sowohl mit dem Aufnahmehohlraum (101) als auch mit einer äußeren Umgebung der Batteriezelle (1) in Verbindung steht, wobei der Verschlussstopfen (400) so eingerichtet ist, dass er das Durchgangsloch (102) abdichtet, und Folgendes umfasst: einen thermisch verformbaren Abschnitt (420) und einen ersten festen Abschnitt (410), wobei der thermisch verformbare Abschnitt (420) mindestens einen Teil des Durchgangslochs (102) abdeckt und der erste feste Abschnitt (410) an einer Außenfläche des Gehäuses (100) befestigt ist und mit einem ersten Kontaktloch (401) versehen ist, das mit dem Aufnahmehohlraum (101) in Verbindung steht;
der thermisch verformbare Abschnitt (420) in dem ersten Kontaktloch (401) angeordnet ist und das erste Kontaktloch (401) abdichtet,
der thermisch verformbare Abschnitt (420) ein thermisch verformbares Element (421) umfasst, wobei das thermisch verformbare Element (421) Folgendes umfasst: einen Körper (4211), wobei der Körper (4211) durch das erste Kontaktloch (401) verläuft; einen ersten ringförmigen Ansatz (4212), wobei der erste ringförmige Ansatz (4212) gebildet wird, indem sich ein Ende des Körpers (4211), das sich in den Aufnahmehohlraum (101) erstreckt, von einer Achse des ersten Kontaktlochs (401) weg erstreckt, und der erste ringförmige Ansatz (4212) um den Körper (4211) herum angeordnet ist und an einer Oberfläche des ersten festen Abschnitts (410) befestigt ist, die zum Aufnahmehohlraum (101) zeigt; und einen zweiten ringförmigen Ansatz (4213), wobei der zweite ringförmige Ansatz (4213) gebildet wird, indem sich ein Ende des Körpers (4211), das sich aus dem Gehäuse (100) heraus erstreckt, von der Achse des ersten Kontaktlochs (401) weg erstreckt, und der zweite ringförmige Ansatz (4213) um den Körper (4211) herum angeordnet ist und an einer Oberfläche des ersten festen Abschnitts (410) befestigt ist, die von dem Aufnahmehohlraum (101) weg zeigt; das thermisch verformbare Element (421) so eingerichtet ist, dass es sich verformt, wenn eine Temperatur der Batteriezelle (1) höher als ein voreingestellter Schwellenwert ist, sodass der Aufnahmehohlraum (101), das erste Kontaktloch (401) und die äußere Umgebung sequenziell in Verbindung stehen;
der thermisch verformbare Abschnitt (420) ferner einen zweiten festen Abschnitt (422) umfasst; und
**dadurch gekennzeichnet, dass** das thermisch verformbare Element (421) mit einem zweiten Kontaktloch (402) versehen ist, das den Aufnahmehohlraum (101) mit der äußeren Umgebung verbindet, und der zweite feste Abschnitt (422) in dem zweiten Kontaktloch (402) vorgesehen ist und das zweite Kontaktloch (402) abdichtet.

2. Batteriezelle (1) nach Anspruch **1,** wobei der erste feste Abschnitt (410) ein Basisteil (411) und ein Verlängerungsteil (412) umfasst;
das Basisteil (411) sich mindestens teilweise in das Durchgangsloch (102) erstreckt, und das Basisteil (411) mit dem ersten Kontaktloch (401) versehen ist; und
das Verlängerungsteil (412) gebildet wird, indem sich eine Seitenwand des Basisteils (411) nach außen erstreckt, und das Verlängerungsteil (412) an der Außenfläche des Gehäuses (100) befestigt ist.

3. Batteriezelle (1) nach Anspruch **1** oder Anspruch **2,** wobei eine das zweite Kontaktloch (402) umgebende Innenfläche eine in Form einer Nut (403) ausgebildete Vertiefung aufweist, und der zweite feste Abschnitt (422) in der Nut (403) aufgenommen ist.

4. Batteriezelle (1) nach einem der Ansprüche **1** bis **3,** wobei der Körper (4211) eine erste Verbindungseinheit (42111) und eine zweite Verbindungseinheit (42112) umfasst, die in einer axialen Richtung des ersten Kontaktslochs (401) miteinander verbunden sind;
ein erster ringförmiger Flansch (4214), der aus einer ringförmigen Wandfläche der Nut (403) herausragt, an einer Seite des Körpers (4211) ausgebildet ist, die dem Aufnahmehohlraum (101) näher ist, und ein zweiter ringförmiger Flansch (4215), der aus der ringförmigen Wandfläche der Nuten (403) herausragt, die an einer Seite des Körpers (4211) ausgebildet ist, die von dem Aufnahmehohlraum (101) entfernt ist;
der erste ringförmige Ansatz (4212) sich von einer Außenfläche der ersten Verbindungseinheit (4211) erstreckt, der zweite ringförmige Ansatz (4213) sich von einer Außenfläche der zweiten Verbindungseinheit (4212) erstreckt, der erste ringförmige Flansch (4214) sich von einer Innenfläche der ersten Verbindungseinheit (4211) erstreckt und der zweite ringförmige Flansch (4215) sich von einer Innenfläche der zweiten Verbindungseinheit (4212) erstreckt; und
die erste Verbindungseinheit (42111) und die zweite Verbindungseinheit (42112) durch Heißschmelzen miteinander verbunden sind, der erste ringförmige Ansatz (4212) und der erste feste Abschnitt (410) durch Heißschmelzen miteinander verbunden sind, der zweite ringförmige Ansatz (4213) und der erste feste Abschnitt (410) durch Heißschmelzen miteinander verbunden sind; der erste ringförmige Flansch (4214) und der zweite feste Abschnitt (422) durch Heißschmelzen miteinander verbunden sind; und der zweite ringförmige Flansch (4215) und der zweite feste Abschnitt (422) durch Heißschmelzen miteinander verbunden sind.

5. Batteriezelle (1) nach einem der Ansprüche **1** bis **4,** wobei der erste feste Abschnitt (410) ein Metall umfasst; und/oder
der zweite feste Abschnitt (422) das Metall umfasst; und/oder
das thermisch verformbare Element (421) mindestens eines umfasst, das aus der Gruppe ausgewählt ist, die aus Polyethylen, Polypropylen, Polyvinylchlorid und Polypropylenethylen besteht.

6. Batteriezelle (1) nach einem der Ansprüche **1** bis **5,** wobei der thermisch verformbare Abschnitt (420) so eingerichtet ist, dass er mindestens teilweise schmilzt oder sich ausdehnt oder schrumpft, wenn die Temperatur der Batteriezelle (1) höher als der voreingestellte Schwellenwert ist, sodass der thermisch verformbare Abschnitt (420) und ein verbundenes Teil mindestens teilweise an einer Verbindungsstelle voneinander getrennt werden.

7. Elektrische Vorrichtung (2), **dadurch gekennzeichnet, dass** sie die Batteriezelle (1) nach einem der Ansprüche **1** bis **6** umfasst.

## Revendications

1. Cellule de batterie (1), comprenant un boîtier (100) et un bouchon d'étanchéité (400), dans laquelle le boîtier (100) est pourvu d'une cavité d'accueil (101) à l'intérieur et d'un trou traversant (102), le trou traversant (102) est configuré pour communiquer à la fois avec la cavité d'accueil (101) et un environnement externe de la cellule de batterie (1), dans laquelle le bouchon d'étanchéité (400) est configuré pour sceller le trou traversant (102) et comprend : une portion déformable thermiquement (420) et une première portion fixe (410), la portion déformable thermiquement (420) couvre au moins une partie du trou traversant (102) et la première portion fixe (410) est fixée à une surface extérieure du boîtier (100), et est pourvue d'un premier trou d'interconnexion (401) communiquant avec la cavité d'accueil (101) ;
la portion déformable thermiquement (420) est disposée dans le premier trou d'interconnexion (401) et scelle le premier trou d'interconnexion (401),
la portion déformable thermiquement (420) comprend un élément déformable thermiquement (421), dans laquelle l'élément déformable thermiquement (421) comprend : un corps (4211), dans laquelle le corps (4211) passe à travers le premier trou d'interconnexion (401) ; un premier bossage annulaire (4212), dans laquelle le premier bossage annulaire (4212) est formé en prolongeant une extrémité du corps (4211) qui s'étend dans la cavité d'accueil (101) à l'opposé d'un axe du premier trou d'interconnexion (401), et le premier bossage annulaire (4212) est agencé autour du corps (4211) et est fixé à une surface de la première portion fixe (410) qui est orientée vers la cavité d'accueil (101) ; et un second bossage annulaire (4213), dans laquelle le second bossage annulaire (4213) est formé en prolongeant une extrémité du corps (4211) qui s'étend hors du logement (100) à l'opposé de l'axe du premier trou d'interconnexion (401), et le second bossage annulaire (4213) est agencé autour du corps (4211) et est fixé à une surface de la première portion fixe (410) qui est orientée à l'opposé de la cavité d'accueil (101) ;
l'élément déformable thermiquement (421) est configuré pour se déformer lorsqu'une température de la cellule de batterie (1) est supérieure à un seuil prédéfini, de sorte que la cavité d'accueil (101), le premier trou d'interconnexion (401) et l'environnement externe communiquent séquentiellement ;
la portion déformable thermiquement (420) comprend en outre une seconde portion fixe (422) ; et
**caractérisée en ce que** l'élément déformable thermiquement (421) est pourvu d'un second trou d'interconnexion (402) faisant communiquer la cavité d'accueil (101) avec l'environnement externe, et la seconde portion fixe (422) est prévue dans le second trou d'interconnexion (402) et scelle le second trou d'interconnexion (402).

2. Cellule de batterie (1) selon la revendication **1,** dans laquelle la première portion fixe (410) comprend une partie de base (411) et une partie d'extension (412) ;
la partie de base (411) s'étend au moins partiellement dans le trou traversant (102), et la partie de base (411) est pourvue du premier trou d'interconnexion (401) ; et
la partie d'extension (412) est formée en prolongeant une paroi latérale de la partie de base (411) vers l'extérieur, et la partie d'extension (412) est fixée à la surface extérieure du boîtier (100).

3. Cellule de batterie (1) selon la revendication **1** ou la revendication **2,** dans laquelle une surface intérieure entourant le second trou d'interconnexion (402) a un évidement ayant la forme d'une rainure (403), et la seconde portion fixe (422) est reçue dans la rainure (403).

4. Cellule de batterie (1) selon l'une quelconque des revendications **1** à **3,** dans laquelle le corps (4211) comprend une première unité de liaison (42111) et une seconde unité de liaison (42112) qui sont reliées mutuellement dans une direction axiale du premier trou d'interconnexion (401) ;
une première bride annulaire (4214) faisant saillie à partir d'une surface de paroi annulaire de la rainure (403) est formée sur un côté du corps (4211) plus proche de la cavité d'accueil (101), et une seconde bride annulaire (4215) faisant saillie à partir de la surface de paroi annulaire de la rainure (403) formée sur un côté du corps (4211) à l'opposé de la cavité d'accueil (101) ;
le premier bossage annulaire (4212) s'étend à partir d'une surface extérieure de la première unité de liaison (42111), le second bossage annulaire (4213) s'étend à partir d'une surface extérieure de la seconde unité de liaison (42112), la première bride annulaire (4214) s'étend à partir d'une surface intérieure de la première unité de liaison (42111), et la seconde bride annulaire (4215) s'étend à partir d'une surface intérieure de la seconde unité de liaison (42112) ; et
la première unité de liaison (42111) et la seconde unité de liaison (42112) sont fixées l'une à l'autre par le biais d'une fusion à chaud, le premier bossage annulaire (4212) et la première portion fixe (410) sont fixés l'un à l'autre par le biais d'une fusion à chaud, le second bossage annulaire (4213) et la première portion fixe (410) sont fixés l'un à l'autre par le biais d'une fusion à chaud ; la première bride annulaire (4214) et la seconde portion fixe (422) sont fixées l'une à l'autre par le biais d'une fusion à chaud ; et la seconde bride annulaire (4215) et la seconde portion fixe (422) sont fixées l'une à l'autre par le biais d'une fusion à chaud.

5. Cellule de batterie (1) selon l'une quelconque des revendications **1** à **4,** dans laquelle la première portion fixe (410) comprend un métal ; et/ou
la seconde portion fixe (422) comprend le métal ; et/ou
l'élément déformable thermiquement (421) comprend au moins un choisi dans le groupe consistant en polyéthylène, polypropylène, polychlorure de vinyle et polypropylène-éthylène.

6. Cellule de batterie (1) selon l'une quelconque des revendications **1** à **5,** dans laquelle la portion déformable thermiquement (420) est configurée pour fondre, ou se dilater, ou se rétracter au moins partiellement lorsque la température de la cellule de batterie (1) est supérieure au seuil prédéfini, de sorte que la portion déformable thermiquement (420) et une partie reliée soient au moins partiellement séparées au niveau d'un joint.

7. Appareil électrique (2), **caractérisé en ce qu'**il comprend la cellule de batterie (1) selon l'une quelconque des revendications **1** à **6.**
